(19) Europäisches Patentamt
European Patent Office
Office européen des brevets

(11) **EP 4 641 149 A1**

(12) **EUROPEAN PATENT APPLICATION**

(43) Date of publication:
**29.10.2025 Bulletin 2025/44**

(21) Application number: **24382429.9**

(22) Date of filing: **22.04.2024**

(51) International Patent Classification (IPC):
**G01J 4/04** (2006.01)   **G01J 3/28** (2006.01)
**G02B 5/20** (2006.01)   **G02B 5/30** (2006.01)
**G02B 27/28** (2006.01)

(52) Cooperative Patent Classification (CPC):
**G01J 4/04; G01J 3/2803;** G01J 2003/2806;
G01J 2003/2813; G02B 5/201; G02B 5/3083;
G02B 27/285

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Universitat de Barcelona**
**08028 Barcelona (ES)**

(72) Inventors:
• **ARTEAGA BARRIEL, Oriol**
**08028 Barcelona (ES)**
• **BIAN, Subiao**
**08028 Barcelona (ES)**

(74) Representative: **Ungria López, Javier**
**Avda. Ramón y Cajal, 78**
**28043 Madrid (ES)**

(54) **A FULL-STOKES POLARIZATION CAMERA SYSTEM**

(57)    The present invention discloses a polarization camera system that integrates a commercially available polarization sensor with a homogeneous dispersive retarder to detect and measure simultaneously the four components of the Stokes vector of polarized light. Unlike existing methods that require complex setups or expensive components, this approach uses a single sensor setup, combining the division of focal plane method with wavelength sensitivity inherent in many camera sensors. The system (1) comprises: a polarization sensor (2) having a polarizer array (2a) and a color channel filter (2b); a photodiode array (2c) configured to measure at least four intensities; a light entrance (4); a microprocessor (5); a first homogeneous dispersive retarder (3). The first homogeneous dispersive retarder is configured to introduce wavelength-dependent retardation $\delta(\lambda)$ to the incident polarized light, so that $[\delta(\lambda i) \neq \delta(\lambda j)]$; and, the microprocessor is configured to calculate a complete Stokes vector of incident polarized light from the measured intensities.

FIG. 2

**Description**

FIELD AND OBJECT OF THE INVENTION

The present invention discloses a full-Stokes polarization camera system that integrates a commercially available polarization sensor with a particular homogeneous dispersive retarder to detect and measure simultaneously the four components of the Stokes vector of polarized light. A retarder, in the context of the present invention, refers to a component that introduces a controlled delay or phase shift to linearly polarized light passing through it. This delay varies with the wavelength of light, making it dispersive. In the context of the present invention, homogeneous dispersive retarders are utilized, which means they introduce the same delay across its entire surface and vary the delay based on the wavelength of light.

Unlike existing complex setups that require multiple cameras and/or micro-retarders arrays, this novel approach uses a homogenous retarder to obtain full information of the polarization state at multiple pixel locations taking advantage of the wavelength sensitivity that is inherent to the photodiodes of camera sensors. This method avoids the fabrication and alignment difficulties of micro-retarders arrays, or the need of dividing the beam into using multiple cameras working simultaneously. Polarization imaging has found diverse applications in fields such as remote sensing, material analysis, and biomedical imaging.

BACKGROUND OF THE INVENTION

The Stokes vector is a four-dimensional parameter that captures the total intensity, linear polarization, circular polarization, and ellipticity of polarized light. The ability to measure the full Stokes vector enables a more detailed analysis of polarization phenomena and expands the range of potential applications for polarization imaging. The Stokes vector can be described as

$$\begin{bmatrix} S_0 \\ S_1 \\ S_2 \\ S_3 \end{bmatrix} = \begin{bmatrix} I_{tot} \\ I_0 - I_{90} \\ I_{45} - I_{135} \\ I_l - I_r \end{bmatrix} \quad (1)$$

$I_0$, $I_{90}$ represent the intensity of horizontal and vertical directions, $I_{45}$, $I_{135}$ represent the intensity of 45° and 135° directions, $I_l$ and $I_r$ represent the intensity of light with left circular and right circular polarization (i.e. related to the direction of circular rotation of the light electromagnetic field). In a common camera, only the first term of the Stokes vector, denoted as $I_{tot}$ representing total intensity, can be directly measured. No polarization information is measured.

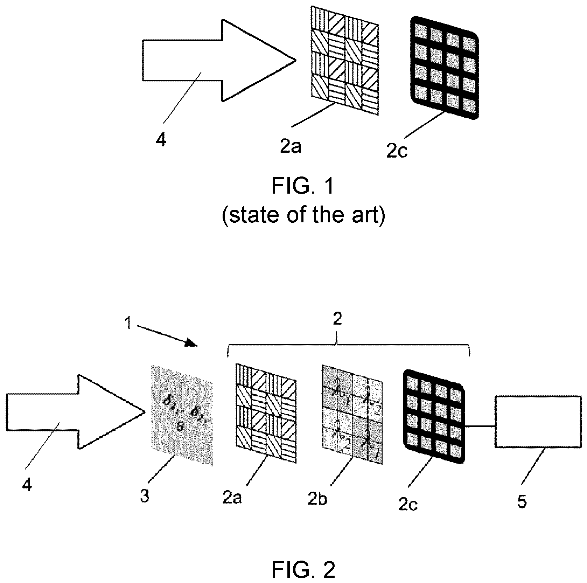

In contrast, a commercial polarization camera enables the direct measurement of the first three terms of the Stokes vector ($S_0$, $S_1$, $S_2$). This is achieved through the integration of a linear micropolarizer array, comprising various orientations (four orientations in Fig. 1), placed in front of each photodiode pixel, as depicted in Fig. 1. In this system, $I_0$, $I_{90}$, $I_{45}$, $I_{135}$ are readable intensities. The fourth term about information of circular polarization ($S_3$) is missing in this commercial configuration, lacking the ability to measure the complete Stokes vector.

Existing approaches to image the four components of the Stokes vector simultaneously using cameras rely on complex and sometimes expensive setups involving multiple polarization elements and/or detectors. Two main approaches can be distinguished: "Division of Amplitude Polarization Imaging" and "Division of focal plane".

The "Division of Amplitude Polarization Imaging" consists of using multiple cameras, each with its own polarization element, so that the incident light is divided into different amplitude channels using beam splitters, instead of using a single camera sensor. In case polarization cameras are used as detectors, two polarization cameras are needed, with at least one of them equipped with its own retarder, to capture the full Stokes vector. This is the most extended method used in the literature. The main disadvantage is that two cameras need to be used and the sensors need to be combined or synchronized to gather comprehensive polarization information in parallel. A prior art document disclosing this knowledge is: Xingzhou Tu, Oliver J. Spires, Xiaobo Tian, Neal Brock, Rongguang Liang, and Stanley Pau, "Division of amplitude RGB full-Stokes camera using micropolarizer arrays," Opt. Express 25, 33160-33175 (2017). 10.1364/OE.25.033160

The "Division of focal plane" is based on commercially available polarization sensors. These types of sensors (Fig. 1) already use a division of focal plane method, but they are not capable of measuring the whole Stokes vector. So far, two approaches have been suggested in the state of the art to measure the full Stokes vector (none of them available commercially):

- With Microretarder Arrays. A microretarder array layer is fabricated and placed on top of the polarizer array to extend its capability to measure all four Stokes parameters. Disadvantage: A microretarder array (made of a birefringent reactive mesogen or liquid crystal polymer) is difficult to fabricate, and to position and align with the array of photodiodes. A prior art document regarding this: Tu, Xingzhou & McEldowney, Scott & Zou, Yang & Smith, Matthew & Guido, Christopher & Brock, Neal & Miller, Sawyer & Jiang, Linan & Pau, Stanley. (2020). Division of focal plane RGB full-Stokes imaging polarimeter. Applied Optics. 59. 10. 1364/AO.391027.

- Polarization Arrays based on Metasurfaces. Metasurfaces sensitive to polarization are designed to split and focus light to various pixels on an image sensor for different polarization bases. The main disadvantage is that a metasurface is very difficult and costly to fabricate. Additionally, Metasurfaces produce loses (leading to low efficiency in light detection). A prior art documents regarding this knowledge are the Patent US20220214219A1, entitled: *"Metasurface Mask for Full-Stokes Division of Focal Plane Polarization* of *Cameras"* and the Patent US11385104B2, entitled: "On-chip polarization detection and polarimetric imaging".

It is desirable to have images of the $S_3$ parameter of the Stokes vector and not just So to $S_2$, because it makes the polarization camera much more informative. For example, in remote sensing applications $S_3$ can be used to distinguish surfaces, since metals reflect light with elliptical polarization ($S_3 \neq 0$) while insulators, such as plastics, provides linear reflection ($S_3 = 0$). The measurement of $S_3$ is also very important for any imaging system that aims to detect tissues or materials with birefringence, since when light propagates through these materials it acquires an ellipticity ($S_3 \neq 0$). These birefringent materials are very diverse, from studying fibrillar biological tissues, detecting contaminating microplastics or checking the stress in Silicon substrates that are used in solar panels or for the manufacture of microchips.

An added value of having the complete Stokes vector is that the degree of polarization (DoP) of the incident light can be evaluated.

$$DoP = \frac{\sqrt{S1^2 + S2^2 + S3^2}}{S0}$$

DESCRIPTION OF THE INVENTION

The present invention overcomes the limitations of conventional polarization sensors by introducing a homogeneous dispersive retarder (waveplate) positioned before a polarization sensor, enabling the detection of diverse polarization states beyond linear polarization. The dispersive retarder introduces wavelength-dependent retardation, $\delta(\lambda)$, between two orthogonal components of linear polarization, allowing the sensor's color channels to capture different polarization states, thereby measuring simultaneously all components of the Stokes vector of incident polarized light. Essentially this method combines the division of the focal plane method offered by the polarization sensor with the sensitivity to wavelength offered by many camera sensors (e.g. cameras with wavelength filters embedded in the sensor or color cameras).

The homogeneous dispersive retarder is actually the simplest and most economical type of retarder that exists. It can be obtained simply with a homogeneous sheet of a transparent crystal such as quartz or sapphire (polymer-based retarders would also be suitable). The size of the retarder only needs to be large enough to cover the entire sensor and its positioning does not require any special alignment. The delay introduced by this sheet is

$$\delta = \frac{2\pi \Delta n \, d}{\lambda}$$

, where $\lambda$ is the wavelength, $\Delta n$ is the difference in refraction indices (ordinary and extraordinary) of the material and d is the thickness of the sheet.

The dispersive retarder is characterized by its ability to introduce wavelength-dependent phase delays, enabling the differentiation of polarization states across various color channels of the sensor. As incident light passes through the dispersive retarder, the different color channels measure the polarization states with varying retardations, allowing for the determination of the full Stokes vector.

Thus, the present invention discloses a full-Stokes polarization camera system comprising:

- a polarization sensor, which in turn comprises: a polarizer array having at least two orientations; a color channel filter configured to detect at least two wavelengths ($\lambda_i$, $\lambda_j$); and, a photodiode array configured to measure at least four intensities, one intensity for each wavelength and orientation combination;
- a light entrance for incident polarized light;
- a microprocessor connected to the photodiode array;
- a first homogeneous dispersive retarder positioned between the polarization sensor and the light entrance, and having an axis orientation -θ-;

wherein the first homogeneous dispersive retarder is configured to introduce wavelength-dependent retardation $\delta(\lambda)$ to the incident polarized light, so that [$\delta(\lambda_i) \neq \delta(\lambda_j)$]; and, wherein the microprocessor is configured to calculate the complete (i.e., the four components) Stokes vector of incident polarized light from the measured intensities.

In a particular embodiment of the invention, the photodiode array is configured to measure eight intensities when the polarizer array has four orientations and the color channel filter is configured to detect two wavelengths ($\lambda_i$, $\lambda_j$).

In a particular embodiment of the invention, the color channel filter is a Red-Green-Blue "RGB" sensor, so that when the polarizer array has four orientations, the color channel filter is configured to detect the wavelengths of the red, green and blue colors, the system is configured to provide color images.

In a particular embodiment of the invention, when the polarizer array has at least two orientations, the system further comprises a second homogeneous dispersive retarder configured to introduce wavelength-dependent retardation $\delta'(\lambda)$ so that [$\delta'(\lambda_i) \neq \delta'(\lambda_j)$]. The second homogeneous dispersive retarder is placed between the first homogeneous dispersive retarder and the polarization sensor, and having an axis orientation -θ'-, so

that [$\delta(\lambda_i)= \delta'(\lambda_i)$; $\delta(\lambda_j)= \delta'(\lambda_j)$; $\theta \neq \theta'$] or [$\delta(\lambda_i) \neq \delta'(\lambda_i)$; $\delta(\lambda_j) \neq \delta'(\lambda_j)$; $\theta \neq \theta'$]. In this embodiment the photodiode array is configured to measure four intensities.

In a particular embodiment of the invention, the first homogeneous dispersive retarder and/or the second homogeneous dispersive retarder provide a retardance difference from 1° to 179° degrees. Preferably, the first homogeneous dispersive retarder and/or the second homogeneous dispersive retarder provide a retardance difference of 90 degrees: $|\delta(\lambda_i) - \delta(\lambda_j)| = 90°$, which offers optimal conditioning of the system.

In a particular embodiment of the invention, the microprocessor is further configured to carry out a calibration procedure consisting of calculating the orientation of the retarder's axis ($\theta, \theta'$) and the retardance ($\delta, \delta'$) at each wavelength ($\delta(\lambda_i), \delta(\lambda_j)$), for known polarization of the incident polarized light.

In a particular embodiment of the invention, the microprocessor is further configured to calculate the complete Stokes vector from the measured intensities. e.g.:

$$\begin{bmatrix} I_1(\lambda_1) & I_1(\lambda_2) \\ I_2(\lambda_1) & I_2(\lambda_2) \\ I_3(\lambda_1) & I_3(\lambda_2) \\ I_4(\lambda_1) & I_4(\lambda_2) \end{bmatrix} \longrightarrow \begin{Bmatrix} S_0 \\ S_1 \\ S_2 \\ S_3 \end{Bmatrix}$$

where

$$\begin{bmatrix} S_0 \\ S_1 \\ S_2 \\ S_3 \end{bmatrix} = \begin{bmatrix} I_{tot} \\ I_0 - I_{90} \\ I_{45} - I_{135} \\ I_l - I_r \end{bmatrix}$$

wherein $I_0$, $I_{90}$ represent the intensity of horizontal and vertical directions, $I_{45}$, $I_{135}$ represent the intensity of 45° and 135° directions, $I_l$ and $I_r$ represent the intensity of left circular and right circular light.

BRIEF DESCRIPTION OF THE FIGURES

Figure 1 shows a polarization camera system. It is the commercially available state of the art.
Figure 2 shows a full-Stokes polarization camera system according to a first embodiment of the present invention.
Figure 3 shows a full-Stokes polarization camera system according to a second embodiment of the present invention.
Figure 4 shows a full-Stokes polarization camera system according to a third embodiment of the present invention.

DESCRIPTION OF PREFERRED EMBODIMENTS OF THE INVENTION

References used in the figures:

1.- Full-Stokes polarization camera system;
2.- Polarization sensor:

- polarizer array (2a);
- color channel filter (2b)
- photodiode array (2c)

3.- first homogeneous dispersive retarder;
3'.- second homogeneous dispersive retarder;
4.- light entrance for incident polarized light;
5.- microprocessor.

The first embodiment is given in Fig. 2 and it is mainly based on a binary color channel filter and a polarizer array having four orientations. Two different wavelengths or colors are enough for the Full Stokes vector measurement. The homogeneous dispersive retarder 3 can be easily accomplished using crystal plates (also known as waveplates) as crystals are naturally dispersive materials, so that for the wavelengths of interest $\lambda_1$ and $\lambda_2$ the retardance are different [$\delta(\lambda_1) \neq \delta(\lambda_2)$]. The conditions of the measurement are optimal when $|\delta(\lambda_1) - \delta(\lambda_2)| = 90°$ because it leads to maximum separation of polarization states between the two wavelengths $\lambda_1$ and $\lambda_2$, enhancing the system's ability to capture a wide range of polarization information. However, measurements are also possible if the difference in retardance between the two wavelengths is less or more than 90 degrees, i.e., between 1 and 179 degrees.

The full-Stokes polarization camera system 1 as shown in FIG. 2 comprises the polarization sensor 2, the light entrance 4 for incident polarized light, the microprocessor 5 and the first homogeneous dispersive retarder 3. The polarization sensor 2 comprises: the polarizer array 2a having four orientations, the color channel filter 2b configured to detect two wavelengths "$\lambda_1$" and "$\lambda_2$" and the photodiode array 2c configured to measure eight intensities since two wavelengths pass through four orientations. The first homogeneous dispersive retarder 3 is positioned between the polarization sensor 2 and the light entrance 4. The first homogeneous dispersive retarder 3 has an axis orientation -$\theta$-, and it is configured to introduce wavelength-dependent retardation $\delta(\lambda)$ to the incident polarized light, so that [$\delta(\lambda_1) \neq \delta(\lambda_2)$]. The microprocessor 5 is connected to the photodiode array 2c, and it is also configured to calculate a complete Stokes vector of the incident polarized light passing through the light entrance 4 from the eight measured intensities.

Calibration procedures are crucial to ensure the accuracy and consistency of polarization measurements across the wavelength sensitive sensor. This mainly involves the determination of the axis orientation -$\theta$- of the homogeneous dispersive retarder 3 and the retar-

dance at each wavelength $\delta(\lambda_1)$ and $\delta(\lambda_2)$, for known polarization inputs of the incident polarized light.

To calculate the complete Stokes vector of the incident polarized light, the microprocessor 5 employs mathematical algorithms, such as inversion techniques. These mathematical algorithms analytically calculate, in real time, the values of $S_0$, $S_1$, $S_2$ and $S_3$ from measured intensities provided that the values of the $\theta$, $\delta(\lambda_1)$ and $\delta(\lambda_2)$ are known (they are determined from calibration)

$$\begin{bmatrix} I_1(\lambda_1) & I_1(\lambda_2) \\ I_2(\lambda_1) & I_2(\lambda_2) \\ I_3(\lambda_1) & I_3(\lambda_2) \\ I_4(\lambda_1) & I_4(\lambda_2) \end{bmatrix} \longrightarrow \begin{bmatrix} S_0 \\ S_1 \\ S_2 \\ S_3 \end{bmatrix}$$

The above calibration procedures and Stokes vector calculation, also apply to the following second and third embodiments as well as any other part of the present disclosure.

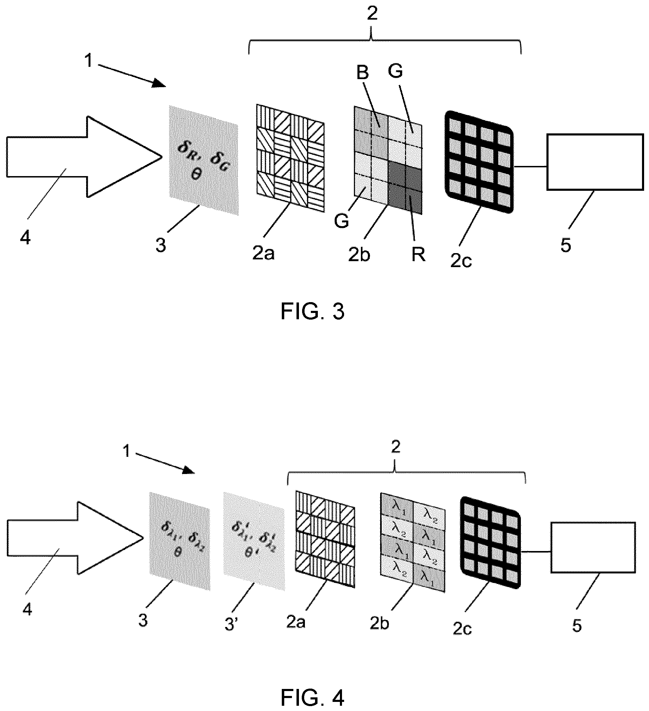

The second embodiment is given in Fig. 3 and it is mainly based on a RGB color channel filter and a polarizer array having four orientations. Bayer filter arrays are commonly used in digital cameras to capture color information. This array typically consists of red, green, and blue (RGB) color channel filters arranged in a specific pattern over the camera sensor (photodiode array). Each pixel on the sensor is filtered to detect either red, green, or blue light.

This implementation enables the full-Stokes polarization camera system 1 to capture both color and full polarization information simultaneously, providing a fused output that allows for comprehensive analysis and visualization of polarized scenes. The configuration of a commercial color polarization camera is illustrated in Fig. 3. In the embodiment of Fig. 3, two color channels (e,g, the Green (G) and Red (R), or the Blue (B) and Green (G)) are enough to extract the full polarization information, so that the Stokes vector of the incident light at the light entrance 4 is shown at the camera frame rate. The remaining color channel is only used to capture the color image. Alternatively, all three-color channels can be used for polarization measurement. This leads to twelve intensities since three wavelengths (colors) pass through four orientations.

The full-Stokes polarization camera system 1 as shown in FIG. 3 comprises the polarization sensor 2, the light entrance 4 for incident polarized light, the microprocessor 5 and the first homogeneous dispersive retarder 3. The polarization sensor 2 comprises: the polarizer array 2a having four orientations, the color channel filter 2b configured to detect three wavelengths "$\lambda_1$" (Red - 750 nm), "$\lambda_2$" (Green 550nm) and "$\lambda_3$" (Blue 470 nm) and the photodiode array 2c configured to measure eight intensities since two wavelengths pass through four orientations. The first homogeneous dispersive retarder 3 is positioned between the polarization sensor 2 and the light entrance 4. The first homogeneous dispersive retarder 3 has an axis orientation -$\theta$-, and it is configured to introduce wavelength-dependent retardation $\delta(\lambda)$ to the incident polarized light, so that $[\delta(\lambda_1) \neq \delta(\lambda_2)]$. The microprocessor 5 is connected to the photodiode array 2c, and it is also configured to calculate a complete Stokes vector of the incident polarized light passing through the light entrance 4 from the eight measured intensities.

The third embodiment is given in Fig. 4 and it is mainly based on a two-colors channel filter and a polarizer array having two orientations. This implementation is operative to determine the full Stokes vector when the orientation of the two homogenous retarders 3 and 3' that are superposed, are oriented at different angles ($\theta$ and $\theta'$). For this implementation it is always necessary that $\theta \neq \theta'$. This superposition of two misoriented retarders is the most flexible and general form of retarder (sometimes it is called an "elliptical retarder"). Note that two homogenous retarders 3 and 3' in Fig. 4 can be chosen as two identical misaligned retarders ($\delta(\lambda_1)= \delta'(\lambda_1)$, $\delta(\lambda_2)= \delta'(\lambda_2)$ and $\theta \neq \theta'$) or they can have different retardances ($\delta(\lambda_1) \neq \delta'(\lambda_1)$, $\delta(\lambda_2) \neq \delta'(\lambda_2)$ and $\theta \neq \theta'$).

The full-Stokes polarization camera system 1 as shown in FIG. 4 comprises the polarization sensor 2, the light entrance 4 for incident polarized light, the microprocessor 5, the first homogeneous dispersive retarder 3 and the second homogeneous dispersive retarder 3'. The polarization sensor 2 comprises: the polarizer array 2a having two orientations, the color channel filter 2b configured to detect three wavelengths "$\lambda_1$" and "$\lambda_2$" and the photodiode array 2c configured to measure four intensities since two wavelengths pass through four orientations. The first homogeneous dispersive retarder 3 and the second homogeneous dispersive retarder 3' are facing each other and positioned between the polarization sensor 2 and the light entrance 4. The first homogeneous dispersive retarder 3 has an axis orientation -$\theta$-, and it is configured to introduce wavelength-dependent retardation $\delta(\lambda)$ to the incident polarized light, so that $[\delta(\lambda_1) \neq \delta(\lambda_2)]$. The second homogeneous dispersive retarder 3' is configured to introduce wavelength-dependent retardation $\delta'(\lambda)$ so that $[\delta'(\lambda_1) \neq \delta'(\lambda_2)]$, and it also has an axis orientation -$\theta'$-. The first homogeneous dispersive retarder 3 and the second homogeneous dispersive retarder 3' are further configured to provide retardances so that $[\delta(\lambda_1)= \delta'(\lambda_1); \delta(\lambda_2)= \delta'(\lambda_2); \theta \neq \theta']$ or $[\delta(\lambda_1) \neq \delta'(\lambda_1); \delta(\lambda_2) \neq \delta'(\lambda_2); \theta \neq \theta']$. The microprocessor 5 is connected to the photodiode array 2c, and it is also configured to calculate a complete Stokes vector of the incident polarized light passing through the light entrance 4 from the four measured intensities (since two wavelengths pass through two orientations). This is the minimum number of detected intensities that allow the full Stokes vector measurement.

**Claims**

1. A full-Stokes polarization camera system (1) comprises:

   • a polarization sensor (2), which in turn comprises:

      ◦ a polarizer array (2a) having at least two orientations;
      ◦ a color channel filter (2b) configured to detect at least two wavelengths ($\lambda_i$, $\lambda_j$); and,
      ◦ a photodiode array (2c) configured to measure at least four intensities, one intensity for each wavelength and orientation combination;

   • a light entrance (4) for incident polarized light;
   • a microprocessor (5) connected to the photodiode array (2c);
   • a first homogeneous dispersive retarder (3) positioned between the polarization sensor (2) and the light entrance (4), and having an axis orientation -$\theta$-;
   wherein the first homogeneous dispersive retarder (3) is configured to introduce wavelength-dependent retardation $\delta(\lambda)$ to the incident polarized light, so that [$\delta(\lambda_i) \neq \delta(\lambda_j)$]; and,
   wherein the microprocessor (5) is configured to calculate a complete Stokes vector of incident polarized light from the measured intensities.

2. A full-Stokes polarization camera system (1), according to claim 1, wherein when the polarizer array (2a) has four orientations and the color channel filter (2b) is configured to detect two wavelengths ($\lambda_i$, $\lambda_j$), the photodiode array (2c) is configured to measure eight intensities.

3. A full-Stokes polarization camera system (1), according to claim 1, wherein when the polarizer array (2a) has four orientations and the color channel filter (2b) is a Red-Green-Blue "RGB" sensor, the color channel filter (2b) is configured to detect the wavelengths of the red, green and blue colors, so that the system is configured to provide color images.

4. A full-Stokes polarization camera system (1), according to claim 1, wherein when the polarizer array (2a) has at least two orientations, the system further comprises a second homogeneous dispersive retarder (3') configured to introduce wavelength-dependent retardation $\delta'(\lambda)$ so that [$\delta'(\lambda_i) \neq \delta'(\lambda_j)$], wherein the second homogeneous dispersive retarder (3') is placed between the first homogeneous dispersive retarder (3) and the polarization sensor (2), and having an axis orientation -$\theta'$-, so that [$\delta(\lambda_i)= \delta'(\lambda_i)$; $\delta(\lambda_j)= \delta'(\lambda_j)$; $\theta\#\theta'$] or [$\delta(\lambda_i) \neq \delta'(\lambda_i)$; $\delta(\lambda_j) \neq \delta'(\lambda_j)$; $\theta\neq\theta'$].

5. A full-Stokes polarization camera system (1), according to any of claims 1 to 4, wherein the first homogeneous dispersive retarder (3) and/or the second homogeneous dispersive retarder (3') provide a retardance from 1° to 179° degrees.

6. A full-Stokes polarization camera system (1), according to claim 5, wherein the first homogeneous dispersive retarder (3) and/or the second homogeneous dispersive retarder (3') provide a retardance difference of 90 degrees: $|\delta(\lambda_i) - \delta(\lambda_j)| = 90°$.

7. A full-Stokes polarization camera system (1), according to any of claims 1 to 4, wherein the microprocessor (5) is further configured to carry out a calibration procedure consisting of calculating an orientation of the retarder's axis ($\theta$, $\theta'$) and the retardance ($\delta$, $\delta'$) at each wavelength ($\delta(\lambda_i)$, $\delta(\lambda_j)$), for known polarization of the incident polarized light.

8. A full-Stokes polarization camera system (1), according to any of the preceding claims 1, wherein the microprocessor (5) is further configured to calculate the Stokes vector from the measured intensities:

$$\begin{bmatrix} S_0 \\ S_1 \\ S_2 \\ S_3 \end{bmatrix} = \begin{bmatrix} I_{tot} \\ I_0 - I_{90} \\ I_{45} - I_{135} \\ I_l - I_r \end{bmatrix}$$

wherein $I_0$, $I_{90}$ represent the intensity of horizontal and vertical directions, $I_{45}$, $I_{135}$ represent the intensity of 45° and 135° directions, $I_l$ and $I_r$ represent the intensity of light with left circular and right circular polarization.

FIG. 1
(state of the art)

FIG. 2

FIG. 3

FIG. 4

Europäisches
Patentamt

European
Patent Office

Office européen
des brevets

# EUROPEAN SEARCH REPORT

**Application Number**

EP 24 38 2429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | TU XINGZHOU ET AL: "Division of focal plane red-green-blue full-Stokes imaging polarimeter", APPLIED OPTICS, vol. 59, no. 22, 2 August 2020 (2020-08-02), page G33, XP055828446, US ISSN: 1559-128X, DOI: 10.1364/AO.391027 [retrieved on 2024-09-06] * abstract; figures 1,2,5 * * page 33, left-hand column, paragraph 2 - paragraph 3 * * page 36, right-hand column, paragraph 3 * * page 39, left-hand column, paragraph 1 * | 1-8 | INV. G01J4/04 G01J3/28 ADD. G02B5/20 G02B5/30 G02B27/28 |
| X | BAEK NAKKYU ET AL: "Lensless polarization camera for single-shot full-Stokes imaging", APL PHOTONICS, AMERICAN INSTITUTE OF PHYSICS, 2 HUNTINGTON QUADRANGLE, MELVILLE, NY 11747, vol. 7, no. 11, 17 November 2022 (2022-11-17), XP012271075, DOI: 10.1063/5.0120465 [retrieved on 2022-11-17] * abstract; figure 1 * | 1-4,8 | |
| A | * page 2, right-hand column, paragraph 2 - page 3, left-hand column, paragraph 1 * | 5-7 | |

-/--

**TECHNICAL FIELDS SEARCHED (IPC)**

G01J
G02B

The present search report has been drawn up for all claims

| Place of search | Date of completion of the search | Examiner |
|---|---|---|
| Munich | 6 September 2024 | Gangl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 38 2429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MYHRE GRAHAM ET AL: "Liquid crystal polymer full-stokes division of focal plane polarimeter", OPTICS EXPRESS, vol. 20, no. 25, 3 December 2012 (2012-12-03), page 27393, XP093202555, US ISSN: 1094-4087, DOI: 10.1364/OE.20.027393 | 1,8 | |
| A | * abstract; figure 9 * <br> * page 27401, paragraph 1 - page 27402, paragraph 1 * | 2-7 | |
| X | CN 108 007 575 A (INST OPTICS & ELECTRONICS CAS) 8 May 2018 (2018-05-08) | 1,7,8 | |
| A | * abstract; figures 1,2 * <br> * paragraph [0062] - paragraph [0076] * | 2-6 | |
| A | US 2010/296039 A1 (ZHAO XIAOJIN [CN] ET AL) 25 November 2010 (2010-11-25) <br> * figures 1-5 * <br> * paragraph [0038] - paragraph [0047] * | 1-8 | TECHNICAL FIELDS SEARCHED (IPC) |
| A | US 2016/170110 A1 (PAU STANLEY [US] ET AL) 16 June 2016 (2016-06-16) <br> * figures 1,2,4-7 * <br> * paragraph [0060] - paragraph [0062] * | 1-8 | |
| A | US 2021/333150 A1 (MCELDOWNEY SCOTT CHARLES [US] ET AL) 28 October 2021 (2021-10-28) <br> * figure 7c * <br> * paragraphs [0095], [0096] * | 1-8 | |

The present search report has been drawn up for all claims

| Place of search | Date of completion of the search | Examiner |
|---|---|---|
| Munich | 6 September 2024 | Gangl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................................

& : member of the same patent family, corresponding document

EPO FORM 1503 03.82 (P04C01)

page 2 of 2

## EP 4 641 149 A1

### ANNEX TO THE EUROPEAN SEARCH REPORT
### ON EUROPEAN PATENT APPLICATION NO.

EP 24 38 2429

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | | Publication date | Patent family member(s) | | Publication date |
|---|---|---|---|---|---|
| CN 108007575 | A | 08-05-2018 | NONE | | |
| US 2010296039 | A1 | 25-11-2010 | CN | 101893731 A | 24-11-2010 |
| | | | US | 2010296039 A1 | 25-11-2010 |
| US 2016170110 | A1 | 16-06-2016 | US | 2016170110 A1 | 16-06-2016 |
| | | | US | 2020025990 A1 | 23-01-2020 |
| US 2021333150 | A1 | 28-10-2021 | CN | 115516283 A | 23-12-2022 |
| | | | EP | 4139641 A1 | 01-03-2023 |
| | | | TW | 202201950 A | 01-01-2022 |
| | | | US | 2021333150 A1 | 28-10-2021 |
| | | | WO | 2021217103 A1 | 28-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220214219 A1

- US 11385104 B2

**Non-patent literature cited in the description**

- **XINGZHOU TU** ; **OLIVER J. SPIRES** ; **XIAOBO TIAN,** ; **NEAL BROCK** ; **RONGGUANG LIANG** ; **STANLEY PAU**. Division of amplitude RGB full-Stokes camera using micro-polarizer arrays. *Opt. Express*, 2017, vol. 25, 33160-33175

- **TU, XINGZHOU** ; **MCELDOWNEY, SCOTT** ; **ZOU, YANG** ; **SMITH, MATTHEW** ; **GUIDO, CHRISTO-PHER** ; **BROCK, NEAL** ; **MILLER, SAWYER** ; **JIANG, LINAN** ; **PAU, STANLEY.** Division of focal plane RGB full-Stokes imaging polarimeter.. *Applied Optics*, 2020, vol. 59, 10